# EUROPEAN PATENT APPLICATION

(11) **EP 1 942 035 A1**
(43) Date of publication of application: **09.07.2008**
(21) Application number: 06822044.1
(22) Date of filing: 23.10.2006
(51) Int. Cl.: B60R 21/20, B60N 2/42, B60R 21/02

(54) **OCCUPANT RESTRAINING SYSTEM**

(30) Priority: 28.10.2005 JP 2005314856
(71) Applicant: TAKATA CORPORATION, Minato-ku, Tokyo 106-8510 (JP)
(72) Inventor: YOSHIKAWA, Hiromichi, Tokyo 1068510 (JP); KOSHIKAWA, Kimihiro, Tokyo 1068510 (JP)
(74) Representative: Vossius & Partner
(86) International application number: PCT/JP2006/321024
(87) International publication number: WO 2007/049537

(57) **Abstract**

A passenger restraint apparatus 10 in which a seat bag is inflated stepwise includes a seat bag 12 extending in the right-left width direction of a seat and configured to be inflated so as to push a seat cushion from below, an inner bag 13 provided in the seat bag 12, and an inflator 14 that inflates the seat bag 12 and the inner bag 13. The inner bag 13 extends in the right-left width direction of the seat in the seat bag 12, and the inflator 14 is provided in the inner bag 13 so that the longitudinal direction thereof coincides with the longitudinal direction of the inner bag 13. Gas outlets 17 are provided in an upper surface of the inner bag 13. Through the gas outlets 17, gas in the inner bag 13 is discharged upward into the seat bag 12.

## Description

### Technical Field

The present invention relates to a passenger restraint apparatus that restrains a passenger on a seat of a vehicle, such as an automobile, in case of a collision, and more particularly, to a passenger restraint apparatus that restrains the hips of the passenger in case of a front collision so as to prevent the body of the passenger from moving forward and downward.

### Background Art

As a system for restraining the passenger of an automobile in case of a collision, Japanese Unexamined Patent Application Publication No. 2002-79861 describes a passenger restraint apparatus in which an inflatable bag is disposed between a seat cushion and a seat pan and is inflated in a vehicle collision to push up the front of the seat cushion, thereby preventing a submarine phenomenon in which the passenger tends to pass under a lap belt in case of a front collision even when the passenger wears a seat belt (in this invention, the bag disposed below the seat cushion is referred to as a seat bag).

Japanese Unexamined Patent Application Publication No. 2002-79861 describes that an inflator is disposed in the seat bag and a cylindrical diffuser surrounds the inflator so as to diffuse gas from the inflator.
Patent Document 1: Japanese Unexamined Patent Application Publication No. 2002-79861

In the above-described passenger restraint apparatus described in Japanese Unexamined Patent Application Publication No. 2002-79861, the entire seat bag is inflated uniformly.

### Disclosure of Invention

An object of the present invention is to provide a passenger restraint apparatus in which a seat bag is inflated stepwise.

A passenger restraint apparatus according to the present invention includes a seat bag provided on a lower side of a seat cushion of a seat and configured to inflate so as to push the seat cushion from below; and an inflator configured to inflate the seat bag in a vehicle emergency. The seat bag extends in a right-left width direction of the seat. An inner bag having a capacity smaller than that of the seat bag is provided in the seat bag. The inner bag is provided below a region of the seat cushion on which a passenger sits, and extends in a longitudinal direction of the seat bag. The inner bag includes a gas outlet through which gas is discharged from the inner bag into the seat bag. Gas is supplied from the inflator into the inner bag so as to inflate the inner bag, and the gas in the inner bag is discharged into the seat bag so as to inflate the seat bag.

The ratio of the total open area of the gas outlet to the surface area of the inner bag in an inflated state may be 2 to 40%.

The longitudinal length of the inner bag in the inflated state may be 50 to 80% of the longitudinal length of the seat bag in an inflated state.

The perimeter of the inner bag in the inflated state may be 50 to 80% of the perimeter of the seat bag in the inflated state.

### Brief Description of the Drawings

[Fig. 1] Fig. 1a is a perspective view of a passenger restraint apparatus according to an embodiment, and Fig. 1b is a cross-sectional view, taken along line Ib-Ib in Fig. 1a.
[Fig. 2] Fig. 2 is a horizontal sectional view of a seat bag in the passenger restraint apparatus.
[Fig. 3] Fig. 3a is a top perspective view of an inner bag, and Fig. 3b is a bottom perspective view of the bag.
[Fig. 4] Figs. 4a and 4b are plan views of inner bags according to other embodiments.
[Fig. 5] Fig. 5a is a perspective view of an inner bag according to a further embodiment, Fig. 5b is a perspective view showing the inner bag during manufacturing, and Fig. 5c is a bottom perspective view of the inner bag.
[Fig. 6] Fig. 6a is an exploded perspective view of an inner bag according to a still further embodiment, and Fig. 6b is a perspective view showing the inner bag in an inflated state.

### Detailed Description of the Invention

In a passenger restraint apparatus according to the present invention, when an inflator starts gas discharging in an emergency such as a vehicle collision, gas is supplied from the inflator into an inner bag so as to inflate the inner bag. The gas in the inner bag is discharged into a seat bag through a gas outlet, and the seat bag is thereby inflated. A seat cushion is pushed up from below by the inflated seat bag, or is compressed and hardened by the pushing force, thereby preventing or suppressing forward movement of the hips of the passenger (submarine phenomenon).

In the present invention, the inner bag is disposed on a lower side of a passenger sitting region of the seat cushion. During inflation of the seat bag, the inner bag is first quickly inflated by high-pressure gas from the inflator, and the seat bag is early inflated upward by the inflated inner bag. Consequently, the seat cushion is pushed up, or compressed and hardened relatively early, so that forward movement of the hips of the passenger can be prevented or suppressed earlier.

In the present invention, "a region of the seat cushion on which a passenger sits" refers to a region of the seat cushion set as a sitting region for one person (for example, a region having an upper surface dented in the shape of buttocks of one person). For example, one region is provided in a single seat for one person, two regions are provided in a bench seat for two persons, and three regions are provided in a bench seat for three persons.

For example, when the passenger restraint apparatus of the present invention is applied to a bench seat for two or more persons, an inner bag may be provided for each region of the seat cushion set as a sitting region for one person, or an inner bag may extend over two or more regions.

It is preferable that the ratio of the total open area of the gas outlet to the surface area of the inner bag in an inflated state be 2 to 40%. When this ratio is less than 2%, the inner bag is considerably quickly inflated, but the inflation speed of the seat bag after inflation of the inner bag is markedly low. In contrast, when this ratio is more than 40%, gas does not easily remain in the inner bag (gas is apt to hastily flow from the inner bag into the seat bag), and this lessens the effect of pushing up the seat cushion early by inflation of the inner bag.

By setting the longitudinal length of the inner bag in an inflated state at 50 to 80% of the longitudinal length of the seat bag in an inflated state, the seat cushion is pushed up early by the inflated inner bag over a relatively wide range in the right-left width direction.

When the perimeter of the inflated inner bag is too small, the seat bag is not sufficiently inflated upward even after the inner bag is inflated, and this lessens the effect of pushing up the seat cushion by the inflated inner bag. In contrast, when the perimeter of the inflated inner bag is too large, inflation of the inner bag takes much time, and it is difficult for the inner bag to push up the seat cushion early. For this reason, as claimed in claim 4, it is preferable that the perimeter of the inner bag in an inflated state be 50 to 80% of the perimeter of the seat bag in an inflated state. The perimeter of each of the inner bag and the seat bag in the inflated state refers to the average of perimeters of cross sections taken in a direction orthogonal to the longitudinal direction of the bag between both ends of the bag in the longitudinal direction.

Embodiments of the present invention will be described below with reference to the drawings.

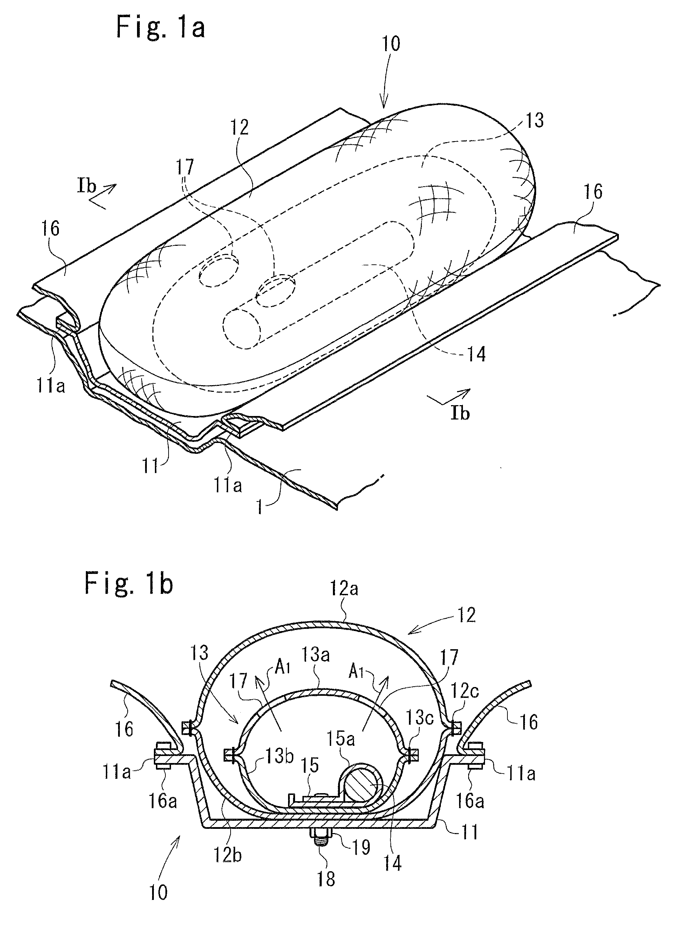

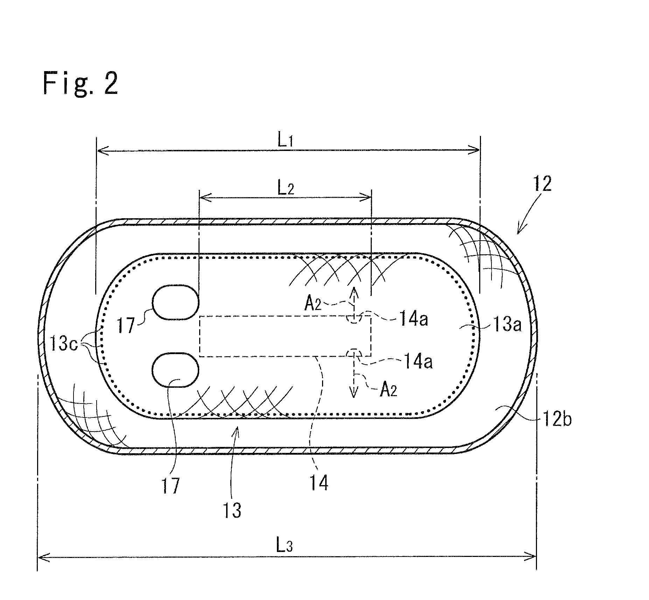

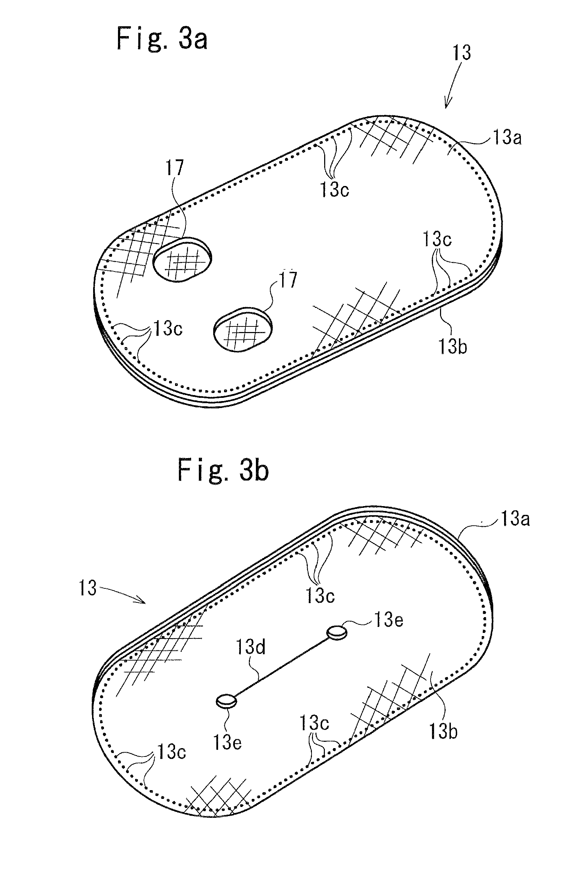

Fig. 1a is a perspective view of a passenger restraint apparatus according to an embodiment, Fig. 1b is a cross-sectional view, taken along line Ib-Ib in Fig. 1a, Fig. 2 is a horizontal sectional view of a seat bag in the passenger restraint apparatus, and Figs. 3a and 3b are top and bottom perspective views of an inner bag, respectively. In the following description, the right-left direction and front-rear direction refer to the right-left width direction and front-rear direction of a seat in which the passenger restraint apparatus is mounted.

A seat pan 1 is disposed on a lower side of a seat cushion (not shown) of a seat installed in an automobile, and a passenger restraint apparatus 10 is disposed on an upper front side of the seat pan 1 (between the seat cushion and the seat pan 1). In this embodiment, the seat is a single seat for one person.

The passenger restraint apparatus 10 includes a retainer 11 shaped like a container having an upper opening, an inflatable seat bag 12 stored in a folded fashion in the retainer 11, an inner bag 13 disposed in the seat bag 12, an inflator 14 that inflates the seat bag 12 and the inner bag 13 in a vehicle emergency, a fixing member 15 that fixes the inner bag 13 and the inflator 14 to the retainer 11, and a lid 16 that closes the upper opening of the retainer 11.

The retainer 11 is substantially shaped like an oblong rectangular parallelepiped, and is disposed on the seat pan 1 so that its longitudinal direction extends in the right-left direction. The retainer 11 can be mounted to the seat by an arbitrary method, and, for example, may be fixed to the seat pan 1 by bolts. Both ends of the retainer 11 may be connected to right and left side frames (not shown). In this case, the seat pan 1 may be omitted. A flange 11a to which the lid 16 is fastened is provided at the rim of the upper opening of the retainer 11.

The seat bag 12 extends in the right-left direction inside the retainer 11. In this embodiment, as shown in Fig. 1b, the seat bag 12 is shaped like a bag by sewing peripheral edges of two panels 12a and 12b that respectively form an upper half and a lower half of an outer peripheral surface of the seat bag 12 in an inflated state. Reference numeral 12c denotes a sewn seam.

As shown in Fig. 2, in this embodiment, the panels 12a and 12b (only the panel 12b is shown in Fig. 2) are each shaped like an oblong ellipse or oval in plan view. These panels 12a and 12b have almost the same size.

The inner bag 13 is provided at almost the center in the longitudinal direction of the seat bag 12 (corresponding to almost the center in the right-left width direction of the passenger sitting region of the seat cushion in this embodiment). The inner bag 13 has a capacity smaller than that of the seat bag 12, and extends in the longitudinal direction of the seat bag 12. In this embodiment, the inner bag 13 is also shaped like a bag by sewing peripheral edges of two panels 13a and 13b that respectively form an upper half and a lower half of an outer surface of the inner bag 13 in an inflated state. Reference numeral 13c denotes a sewn seam.

As shown in Fig. 2, the panels 13a and 13b have a plane area smaller than that of the panels 12a and 12b that define the above-described seat bag 12, and have a planar shape substantially similar to that of the panels 12a and 12b. These panels 13a and 13b have almost the same size.

As shown in Fig. 1b, gas outlets 17 are provided in portions of the upper panel 13a of the inner bag 13 that substantially point upward in a state in which the inner bag 13 is inflated. The gas outlets 17 serve as discharging portions through which gas in the inner bag 13 is discharged upward into the seat bag 12. In this embodiment, two gas outlets 17 are provided. As shown in Fig. 2, in this embodiment, both gas outlets 17 and 17 are disposed closer to one end than the center of the inner bag 13 in the longitudinal direction for the reason that will be described below.

The inflator 14 and the fixing member 15 described above are provided inside the inner bag 13. In this embodiment, a slit 13d is provided near the center of the lower panel 13b of the inner bag 13, and the inflator 14 and the fixing member 15 are placed in the inner bag 13 through the slit 13d.

The inflator 14 is substantially cylindrical in this embodiment, and is placed so that its axial direction is parallel to the longitudinal direction of the inner bag 13. In this embodiment, as shown in Fig. 2, a plurality of gas discharging ports 14a are provided in a peripheral surface of the inflator 14 at one end in the axial direction so that the ports are shifted from each other in the circumferential direction. The inflator 14 discharges gas from the gas discharging ports 14a in the radial direction shown by arrows A₂ in Fig. 2 (direction of the diameter of the inner bag 13).

As shown in Fig. 2, the end of the inflator 14 where the gas discharging ports 14a are provided is disposed at one longitudinal end of the inner bag 13 farther from the gas outlets 17. That is, the gas discharging ports 14a are provided near one longitudinal end of the inner bag 13, and the gas outlets 17 are provided near the other longitudinal end of the inner bag 13. By thus placing the inflator 14, gas discharged from the gas discharging ports 14a does not hastily flow from the gas outlets 17 into the seat bag 12, but remains in the inner bag 13 for a short time.

Consequently, inflation of the inner bag 13 is promoted, and high-temperature gas discharged from the inflator 14 is prevented from being directly blown against the panels 12a and 12b that define the seat bag 12, and the seam 12c that connects the panels 12a and 12b.

The fixing member 15 is shaped like a plate extending along a bottom face of the retainer 11, and is disposed so as to press the lower panels 13b and 12b of the inner bag 13 and the seat bag 12 against the bottom face of the retainer 11 from the inside of the inner bag 13. The above-described slit 13d is provided in a region of the panel 13b on which the fixing member 15 is placed. The inflator 14 is disposed on the upper side of the fixing member 15, and is fixed to the fixing member 15 by a bracket 15a.

Stud bolts 18 project from a lower surface of the fixing member 15. In this embodiment, two stud bolts 18 and 18 project at positions shifted in the right-left direction of the fixing member 15 when mounted (longitudinal direction of the seat bag 12). These stud bolts 18 and 18 are respectively extend through bolt insertion holes provided in the panels 13b and 12b and the bottom face of the retainer 11, and protrude downward from the retainer 11. Only bolt insertion holes 13e provided in the panel 13b are shown in Fig. 3b. In this embodiment, the bolt insertion hole 13e is provided at each end of the slit 13d.

By fastening nuts 19 to the stud bolts 18, the fixing member 15 is fixed to the retainer 11, and the lower panels 13b and 12b of the inner bag 13 and the seat bag 12 are clamped between the fixing member 15 and the bottom face of the retainer 11. The fixing member 15 and the panel 12b are aligned with the slit 13d from the inside and outside of the inner bag 13, thus closing the slit 13d.

The lid 16 is shaped like a substantially rectangular plate that covers the upper opening of the retainer 11, and a peripheral edge thereof is placed on and fixed to the flange 11a of the retainer 11 by fixtures 16a. A tear line (fragile portion) extends so as to cross the lid 16 in the right-left direction. When the seat bag 12 and the inner bag 13 are inflated, the lid 16 is cloven along the tear line by inflation pressure, and starts to open in the front-rear direction to form flaps, as shown in Fig. 1b.

In the present invention, it is preferable that the longitudinal length L₁ of the inner bag 13 be 50 to 80% of the longitudinal length L₃ of the seat bag 12, more particularly, 60 to 75%, as shown in Fig. 2. Further, it is preferable that the longitudinal length L₁ of the inner bag 13 be larger than the longitudinal length L₂ of the inflator 14, which extends in the longitudinal direction of the inner bag 13, by at least 50 mm, more particularly, by 100 to 200 mm.

As shown in Fig. 1b, it is preferable that the perimeter of the inner bag 13 in an inflated state be approximately 50 to 80% of the perimeter of the seat bag 12 in an inflated state. The perimeter of each of the inner bag 13 and the seat bag 12 in the inflated state refers to the average of perimeters of cross sections taken in a direction orthogonal to the longitudinal direction of the bag between both ends of the bag in the longitudinal direction.

The passenger restraint apparatus 10 having the above-described configuration operates as follows.

When a front collision of a vehicle is detected, the inflator 14 is actuated, and gas is discharged into the inner bag 13 through the gas discharging ports 14a. The inner bag 13 is inflated by the gas from the inflator 14, and the gas in the inner bag 13 is discharged into the seat bag 12 through the gas outlets 17, so that the seat bag 12 is inflated. The front of the seat cushion is pushed up by the inflated seat bag 12, or is compressed and hardened by the pushing force. This prevents or suppresses forward movement of the hips of the passenger sitting on the seat.

In the passenger restraint apparatus 10, the inner bag 13 is disposed on the lower side of the passenger sitting region of the seat cushion. For inflation of the seat bag 12, the inner bag 13 is first quickly inflated by high-pressure gas from the inflator 14, and the seat bag 12 is inflated upward early because of the inflated inner bag 13. Thereby, the front of the seat cushion is pushed up, or is compressed and hardened relatively early. This can prevent or suppress forward movement of the hips of the passenger earlier.

In this embodiment, the gas outlets 17 are provided in the upper surface of the inflated inner bag 13, and gas in the inner bag 13 is discharged upward into the seat bag 12 through the gas outlets 17. Therefore, the upper panel 12a of the seat bag 12 is pushed up by the pressure of gas discharged from the gas outlets 17, and upward inflation of the seat bag 12 is promoted. As a result, the inflated seat bag 12 also pushes up the front of the seat cushion early. This makes it possible to more effectively prevent or suppress forward movement of the hips of the passenger.

In this embodiment, the longitudinal length L₁ of the inner bag 13 is 50 to 80% of the longitudinal length L₃ of the seat bag 12. Further, the inflator 14 extends in the longitudinal direction of the seat bag 12. The extending length L₁ of the inner bag 13 is larger than the extending length of the inflator 14 by 200 mm or more. For this reason, the seat cushion is pushed up early by inflation of the inner bag 13 over a relatively wide range in the right-left width direction.

In this embodiment, the perimeter of the inflated inner bag 13 is 50 to 80% of the perimeter of the inflated seat bag 12. Therefore, the seat cushion is effectively pushed up early by inflation of the inner bag 13.

The above-described embodiment is an exemplary embodiment of the present invention, and the present invention is not limited to the above embodiment.

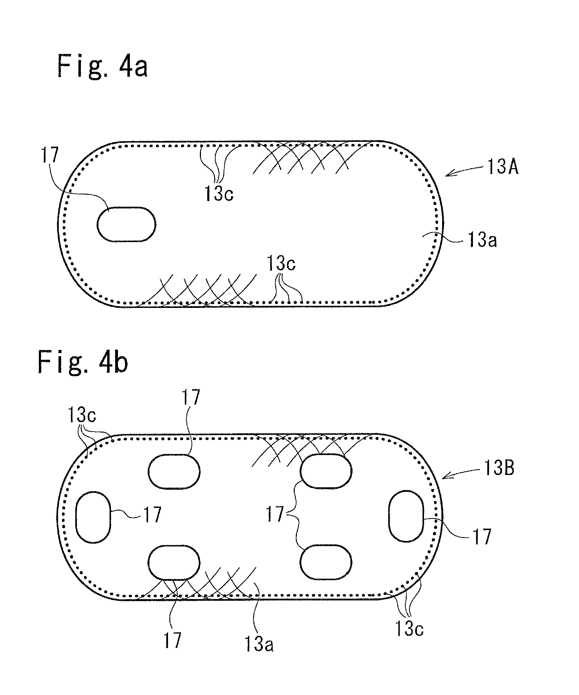

While two gas outlets 17 are provided so that gas is discharged upward from the inner bag 13 into the seat bag 12 therethrough, the number of gas outlets 17 is not limited to two. For example, only one gas outlet 17 may be provided, as in an inner bag 13A shown in Fig. 4a, and three or more (six in Fig. 4b) gas outlets 17 may be provided, as in an inner bag 13B shown in Fig. 4b.

While the gas outlets 17 are provided in a region between the center and peripheral edge of the upper surface of the inner bag 13 (region relatively close to the peripheral edge) in the above-described embodiments, the arrangement of the gas outlets 17 is not limited thereto. For example, the gas outlets 17 may be provided near the center of the upper surface of the inner bag 13.

Gas outlets may also be provided in a portion that does not point upward when the inner bag 13 is inflated (for example, a portion pointing forward or rearward).

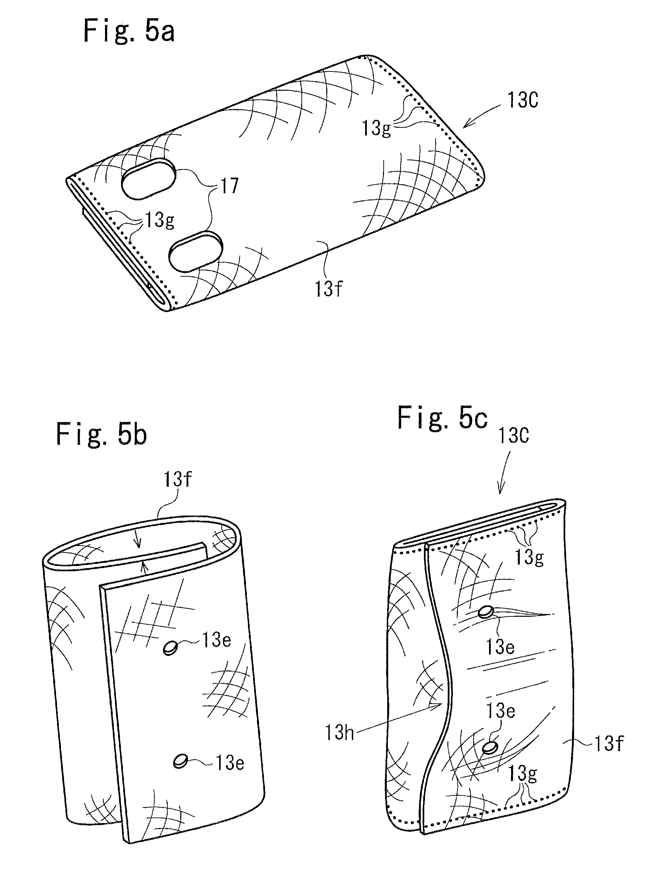

While the inner bag 13 is shaped like a bag by sewing the peripheral edges of the two panels 13a and 13b, which form the upper surface and the lower surface, together in the above-described embodiments, the structure of the inner bag is not limited thereto. Figs. 5a to 5c show another structure of the inner bag. Fig. 5a is a top perspective view of an inner bag 13C according to another example, Fig. 5b is a perspective view of the inner bag 13C during sewing, and Fig. 5c is a perspective view of the inner bag 13c after the completion of sewing.

The inner bag 13C shown in Figs. 5a to 5c is formed of one rectangular panel 13f. That is, the inner bag 13C is shaped like a bag by rolling the panel 13f into a cylinder so that both side edges are placed one on another, and sewing the cylinder at one end and the other end in the axial direction by seams 13g of thread or the like.

In this case, both side edges of the panel 13f are not connected. In this embodiment, a portion between the side edges serves as an inflator insertion opening 13h through which the inflator 14 (and the fixing member 15) is put into the inner bag 13C.

Insertion holes 13d for the stud bolts 18 of the fixing member 15 are provided through the aligned side edges of the panel 13f. The fixing member 15 is disposed so as to press the aligned side edges of the panel 13f against the retainer 11 from the inside of the inner bag 13A. The stud bolts 18 are fitted in the insertion holes 13e.

While two gas outlets 17 are also provided in an upper surface of the inner bag 13C (portions of the panel 13f pointing upward when the inner bag 13C is inflated) in this embodiment, the arrangement of the gas outlets is not limited thereto.

The inner bag 13C is used instead of the inner bag 13 in the above-described passenger restraint apparatus 10 shown in Figs. 1a to 3b. A method for assembling a passenger restraint apparatus including the inner bag 13C is similar to that adopted in the above-described embodiment except that the inflator 14 and the fixing member 15 are inserted in the inner bag 13C through the inflator insertion opening 13h.

While the seat bag 12 is also shaped like a bag by sewing the peripheral edges of the two panels 12a and 12b, which form the upper side and the lower side, in the above-described embodiment, the structure of the seat bag is not limited thereto. For example, the seat bag 12 may be formed of one panel, similarly to the above-described inner bag 13C shown in Fig. 5b.

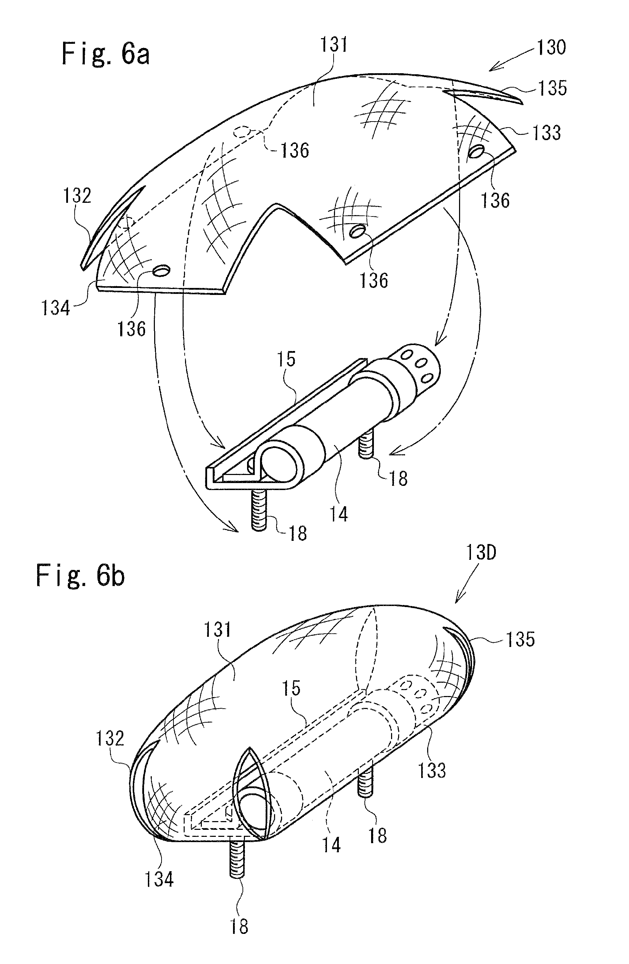

The inner bag of the present invention may be formed by shaping a panel like a bag without sewing. Figs. 6a and 6b are perspective views of an inner bag having such a structure. Fig. 6a shows a state before the panel that defines the inner bag is mounted, and Fig. 6b shows a state after the panel is mounted.

A panel 130 that defines an inner bag 13D shown in Figs. 6a and 6b is substantially cross-shaped in plan view, and includes tongue-shaped overhang portions 132, 133, 134, and 135 projecting from a center portion 131 in four directions.

The overhang portion 132 projects forward from the center portion 131, the overhang portion 133 projects rearward from the center portion 131, the overhang portion 134 projects leftward from the center portion 131, and the overhang portion 135 projects rightward from the center portion 131 (these front, rear, right and left coincide with those of the seat).
Bolt insertion holes 136 are provided in leading edges of the overhang portions 132 to 135 so that stud bolts 18 of a fixing member 15 extend therethrough.

As shown in Fig. 6a, the center portion 131 is placed above the fixing member 15, the overhang portions 132 to 135 are turned below the fixing member 15 so as to surround the fixing member 15 (inflator 14) from the front, rear, right, and left sides, and the leading ends of the overhang portions 132 to 135 are retained by the stud bolts 18 via the bolt insertion holes 136. The panel 130 is thereby shaped like a bag so as to form an inner bag 13D, as shown in Fig. 6b.

In the inner bag 13D, clearances between side edges of the overhang portions 132 and 134, between side edges of the overhang portions 134 and 133, between side edges of the overhang portions 133 and 135, and between side edges of the overhang portions 135 and 132 serve as gas outlets (no reference numeral) through which gas in the inner bag 13B is discharged into a seat bag (not shown).

While the above-described embodiment is an example in which the passenger restraint apparatus of the present invention is applied to a single seat for one person, the passenger restraint apparatus of the present invention is also applicable to a bench seat for two or more persons. In this case, the seat bag and the inner bag may be provided in each region of the seat cushion set as a sitting region for one person, or the seat bag and the inner bag may extend over two or more regions.

The above-described embodiments are exemplary embodiments of the present invention, and the present invention is not limited to the above embodiments.
While the present invention has been described in detail with reference to the specific embodiments, it is obvious to those skilled in the art that various modifications are possible without departing from the purpose and scope of the present invention.
This application is based on Japanese Patent Application No. 2005-314856 filed October 28, 2005, which is hereby incorporated by reference herein in its entirety.

## Claims

1. A passenger restraint apparatus comprising:
a seat bag provided on a lower side of a seat cushion of a seat having a passenger sitting region, and configured to inflate so as to push the seat cushion from below; and
an inflator configured to inflate the seat bag in a vehicle emergency,
wherein the seat bag extends in a right-left width direction of the seat,
wherein an inner bag having a capacity smaller than that of the seat bag is provided in the seat bag,
wherein the inner bag is disposed on a lower side of the passenger sitting region of the seat cushion, and extends in a longitudinal direction of the seat bag,
wherein the inner bag includes at least one gas outlet through which gas is discharged from the inner bag into the seat bag, and
wherein gas is supplied from the inflator into the inner bag so as to inflate the inner bag, and the gas in the inner bag is discharged into the seat bag so as to inflate the seat bag.

2. The passenger restraint apparatus according to claim 1, wherein the ratio of the total open area of the gas outlet to the surface area of the inner bag in an inflated state is 2 to 40%.

3. The passenger restraint apparatus according to claim 1 or 2, wherein the longitudinal length of the inner bag in an inflated state is 50 to 80% of the longitudinal length of the seat bag in an inflated state.

4. The passenger restraint apparatus according to any one of claims 1 to 3, wherein the perimeter of the inner bag in an inflated state is 50 to 80% of the perimeter of the seat bag in the inflated state.

5. The passenger restraint apparatus according to claim 1, wherein the gas outlet is provided in an upper surface of the inner bag.

6. The passenger restraint apparatus according to claim 1, wherein the inflator has a gas discharging port provided near at one longitudinal end of the inner bag, and the gas outlet is disposed near the other longitudinal end of the inner bag.
